# EUROPÄISCHE PATENTANMELDUNG

(11) **EP 3 081 797 A1**
(43) Veröffentlichungstag der Anmeldung: **19.10.2016**
(21) Anmeldenummer: 16164261.6
(22) Anmeldetag: 07.04.2016
(51) Int. Cl.: F02K 1/72, F02K 1/76

(54) **TRIEBWERKSVERKLEIDUNG EINER FLUGGASTURBINE**

(30) Priorität: 17.04.2015 DE 102015206985
(71) Anmelder: Rolls-Royce Deutschland Ltd & Co KG, 15827 Blankenfelde-Mahlow (DE)
(72) Erfinder: TODOROVIC, Predrag, 10437 Berlin (DE)
(74) Vertreter: Hoefer & Partner Patentanwälte mbB

(57) **Zusammenfassung**

Die Erfindung bezieht sich auf eine Triebwerksverkleidung einer Fluggasturbine mit einem vorderen Bereich 29 und einem in Axialrichtung verschiebbaren hinteren Bereich 25, dadurch gekennzeichnet, dass der hintere Bereich 25 mittels mehrerer, in einem Winkel zueinander angeordneter, längenveränderbarer Schubumkehraktuatoren 31 gelagert und gehaltert ist.

## Beschreibung

Die Erfindung betrifft eine Triebwerksverkleidung einer Fluggasturbine gemäß den Merkmalen des Oberbegriffs des Anspruchs 1.

Im Einzelnen bezieht sich die Erfindung auf eine Triebwerksverkleidung (nacelle, Gondel) einer Fluggasturbine, mit einem vorderen, feststehenden Bereich und einem in Axialrichtung verschiebbaren hinteren Bereich. Die Verschiebung des hinteren Bereichs erfolgt zum einen, um einen Ringraum zwischen dem vorderen Bereich und dem hinteren Bereich zu öffnen, um für die Schubumkehr die Luftströmung aus dem Nebenstromkanal auszuleiten. Weiterhin kann der hintere Bereich über eine kleinere Strecke verschoben werden, um die Ausströmdüse des Nebenstromkanals (kalte Düse) in ihrem Querschnitt zu verändern (VAN, Variable Area Nozzle = Variable Ausströmungsdüse). Hierbei wird eine geringe Luftmenge durch den sich öffnenden Ringspalt abgeführt. Diese Konstellation wird beispielsweise verwendet, um einen maximalen Schub der Fluggasturbine zu realisieren. Diese zweite Position ist auch zusätzlich zu verschieben, um die Schubumkehrposition zu erreichen.

Aus dem Stand der Technik ist es bekannt, den hinteren Bereich der Triebwerksverkleidung mittels Schienen zu führen und zu lagern. Derartige Schienenkonstruktionen, welche entweder teleskopartig ausgebildet sein können oder bei denen Führungsrollen oder ähnliches entlang der Schienen gleiten, sind konstruktiv aufwendig, teuer in der Herstellung und erhöhen des Gewicht der gesamten Fluggasturbine, da eine Unterstützungsstruktur benötigt wird. Dabei müssen diese Schienensysteme insbesondere verstärkt werden, um seitlichen Luftströmungen oder Windeinflüssen, beispielsweise bei Seitenwindlandungen, widerstehen zu können. Weiterhin, brauchen diese Schienensysteme eine aerodynamische Verkleidung (Biber-Schwanz Verkleidung), welche für die Performance ungünstig ist.

Bei den bekannten Konstruktionen erweist es sich als nachteilig, dass zusätzlich zu der bereits erwähnten Gewichtserhöhung zusätzliche Reibung erzeugt wird. Diese zusätzliche Reibung erfordert verstärkte Antriebsmechanismen, die wiederum zu einem höheren Gewicht und einem größeren Platzbedarf führen. Im Hinblick auf den Platzbedarf erweist es sich auch als nachteilig, dass die Zugänglichkeit der Komponenten zur Wartung eingeschränkt ist.

Der Erfindung liegt die Aufgabe zugrunde, eine Triebwerksverkleidung der eingangs genannten Art zu schaffen, welche bei einfachem Aufbau und einfacher, kostengünstiger Herstellbarkeit die Nachteile des Standes der Technik vermeidet und eine sichere Lagerung des hinteren Bereichs der Triebwerksverkleidung ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass der hinteren Bereich mittels mehrerer, in einem Winkel zueinander angeordneter, längenveränderbarer Schubumkehr/VAN-Aktuatoren gelagert und gehaltert ist. Schubumkehr/VAN-Aktuatoren gemäß dem Stand der Technik sind bei Schubumkehrern immer parallel zur Triebwerksachse angeordnet.

Das erfindungsgemäße Lösungsprinzip kann somit im Wesentlichen auf die aus dem Stand der Technik bekannten Schienenkonstruktionen verzichten. Vielmehr werden die zur Verschiebung des hinteren Bereichs der Verkleidung benötigten Aktuatoren selbst auch als tragende Lagerelemente verwendet. Durch diese Konstruktion ist es möglich, insbesondere auftretende Seitenbelastungen, beispielsweise durch Scherwinde oder bei Seitenwindlandungen, besonders betriebssicher aufzunehmen. Zusätzlich wird eine konzentrische Lagerung des hinteren Bereichs der Triebwerksverkleidung in allen drei Betriebspositionen (Reiseflug, Schubumkehr und Änderung des Querschnitts der Ausströmdüse (VAN)) sichergestellt. In besonders günstiger Weiterbildung der Erfindung ist dabei vorgesehen, dass die Schubumkehraktuatoren eine Fachwerkkonstruktion bilden. Sie sind dabei bevorzugt an ihren Endbereichen jeweils gelenkig gelagert, sodass Längenveränderungen der Schubumkehraktuatoren zu einer statisch bedingten Gesamtkonstruktion beitragen (Thruss Prinzip).

Die erfindungsgemäße Lösung sichert eine zuverlässige und betriebssichere Lagerung des hinteren Bereichs in allen drei Betriebspositionen, in der Reiseflugkonfiguration, in welcher der hintere Bereich anschließend an den vorderen Bereich nach vorne verschoben wurde, in einer Position zum maximalen Schub mit teilweiser Verschiebung des hinteren Bereichs sowie in einer vollständig nach hinten verschobenen Schubumkehrposition. Auf Schienensysteme mit Gleitrollen oder ähnlichem kann dabei im Wesentlichen verzichtet werden. Obere Schienensysteme können jedoch als Sicherung beibehalten werden. Ohne obere Schienensysteme könnte die erfindungsgemäße Lösung auch für Schubvektoring benutzt werden.

Insgesamt ergibt sich somit eine erhebliche Gewichtsreduzierung und eine Reduzierung der aerodynamischen Verluste der äußeren Strömung. Weiterhin wird insbesondere der Zugang zu dem hinteren Bereich der Fluggasturbine zum Zwecke der Wartung wesentlich erleichtert.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2-4: vereinfachte perspektivische Ansichten einer Triebwerksverkleidung einer Fluggasturbine in unterschiedlichen Betriebszuständen,
- Fig. 5: eine vereinfachte Seitenansicht eines Ausführungsbeispiels der erfindungsgemäßen Triebwerksverkleidung, und
- Fig. 6: eine Unteransicht gemäß Fig. 5.

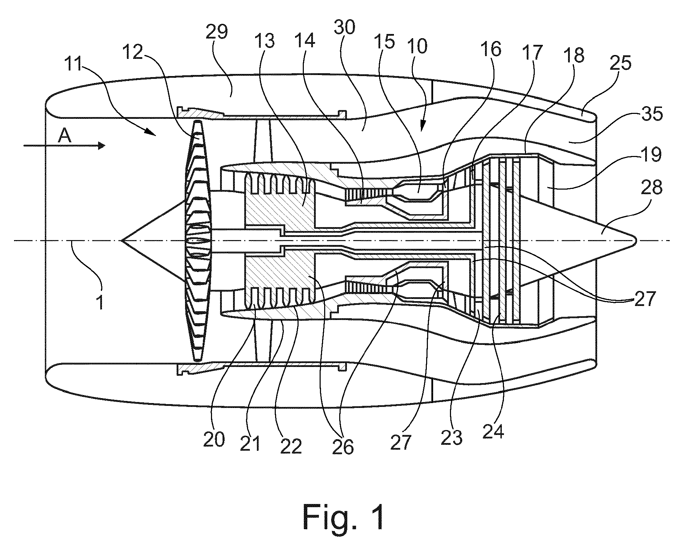

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kerntriebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1.

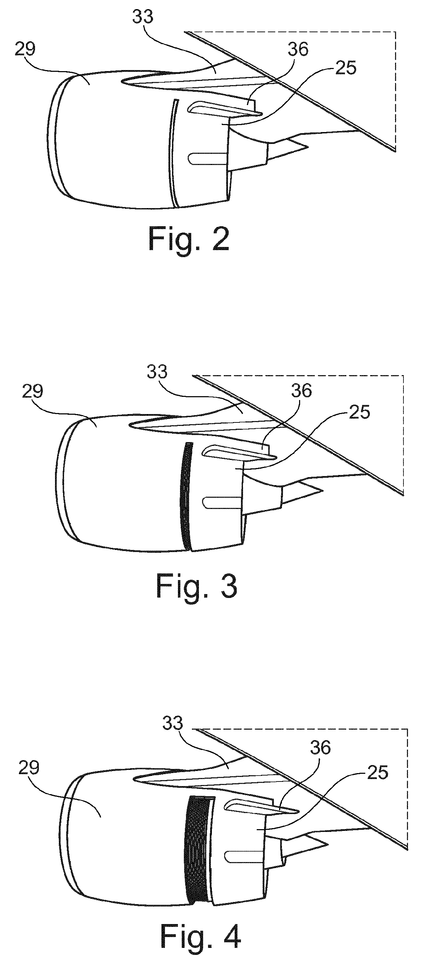

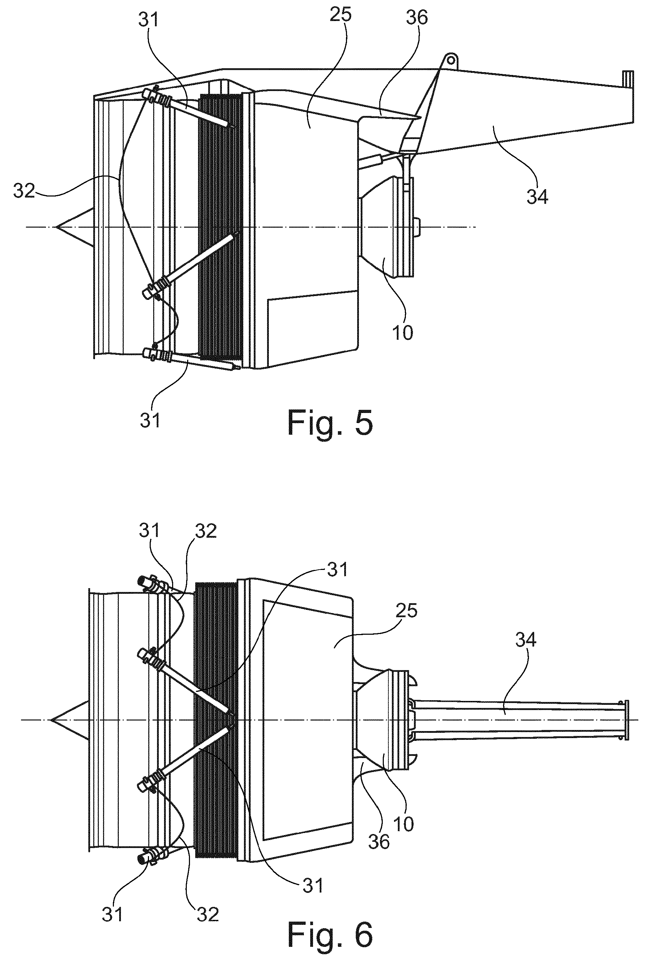

Die Fig. 2 bis 4 zeigen jeweils in vereinfachter perspektivischer Ansicht eine Triebwerksverkleidung einer Fluggasturbine. Die Fluggasturbine ist in üblicher Weise mittels einer Aufhängungsvorrichtung 34 (s. Fig. 5 und 6) an einem im Einzelnen nicht weiter dargestellten Flügel eines Flugzeugs montiert. Die Aufhängungsvorrichtung 34 ist mittels einer Aufhängungsverkleidung 33 verkleidet. Die Fig. 2 bis 4 zeigen, dass die Triebwerksverkleidung einen vorderen, feststehenden Bereichen 29 und einen hinteren, verschiebbaren Bereich 25 umfasst. Die Fig. 4 zeigt eine Reiseflugkonfiguration, bei welcher der hintere Bereich 25 nach vorne verschoben ist und direkt an den vorderen Bereich 29 anschließt. In Fig. 3 ist ein Betriebszustand gezeigt, bei welchem der hintere Bereich 25 teilweise nach hinten verschoben ist. Diese Verschiebung erfolgt, um eine Ausströmdüse 35 des Nebenstromkanals 30 in ihrem Querschnitt zu verändern, so wie dies aus dem Stand der Technik bekannt ist. Dieser Betriebszustand wird für maximalen Schub verwendet. Die Fig. 4 zeigt einen dritten Betriebszustand, bei welchem der hintere Bereich 25 vollständig verschoben ist, um einen Ringraum zu öffnen, durch welchen die Luftströmung im Nebenstromkanal 30 zum Zwecke der Schubumkehr ausgeleitet werden kann. Das Bezugszeichen 36 zeigt eine Verkleidungsverlängerung, welche dazu dient, Führungsschienen oder ähnliches unterzubringen.

Die Fig. 5 und 6 zeigen ein Ausführungsbeispiel der Erfindung in vereinfachter Darstellung. Die Fig. 5 zeigt dabei eine Seitenansicht, wobei der vordere Bereich 29 der Triebwerksverkleidung nicht dargestellt ist. Ebenso wurde auf eine detaillierte Darstellung der Verkleidung des Kerntriebwerks 10 verzichtet.

Die Fig. 5 und 6 zeigen Schubumkehraktuatoren 31, welche beispielsweise teleskopartig wirkend ausgebildet sind und hydraulisch oder elektrisch angetrieben sein können. Dabei sind die Schubumkehraktuatoren 31 jeweils in einem Winkel zueinander angeordnet und bilden somit eine fachwerkartige Konstruktion (Thruss Prinzip). Es versteht sich, dass die Anlenkpunkte der Schubumkehraktuatoren 31 gelenkig ausgebildet sein müssen, um die statische Bestimmtheit der Konstruktion zu gewährleisten. Die einzelnen Schubumkehraktuatoren 31 sind mittels Synchronisierungselementen 32, beispielsweise Synchronisierungskabeln oder ähnlichem, miteinander verbunden oder gekoppelt, um einen gleichmäßigen Betrieb sicherzustellen und zu überwachen. Bei der erfindungsgemäßen Konstruktion ergibt sich somit in jedem der Betriebszustände (s. Fig. 2 bis 4) eine statisch sichere Lagerung des hinteren Bereichs 25 der Triebwerksverkleidung. Im Rahmen der Erfindung kann es vorteilhaft sein, im oberen Bereich (s. Fig. 5) zusätzlich Schienen vorzusehen, welche in den beiden seitlichen Verkleidungsverlängerungen 36, welche sich beidseitig zu der Aufhängungsverkleidung 33 erstrecken, untergebracht sind.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kerntriebwerksgehäuse
- 22: Kompressorlaufschaufeln
- 23: Leitschaufeln
- 24: Turbinenrotorschaufeln
- 25: hinterer Bereich der Verkleidung
- 26: Kompressortrommel oder -scheibe
- 27: Turbinenrotornabe
- 28: Auslasskonus
- 29: vorderer Bereich der Verkleidung
- 30: Nebenstromkanal
- 31: Schubumkehraktuator
- 32: Synchronisierungselement
- 33: Aufhängungsverkleidung
- 34: Aufhängungsvorrichtung
- 35: Ausströmdüse
- 36: Verkleidungsverlängerung

## Patentansprüche

1. Triebwerksverkleidung einer Fluggasturbine mit einem vorderen Bereich (29) und einem in Axialrichtung verschiebbaren hinteren Bereich (25), **dadurch gekennzeichnet, dass** der hintere Bereich (25) mittels mehrerer, in einem Winkel zueinander angeordneter, längenveränderbarer Schubumkehraktuatoren (31) gelagert und gehaltert ist.

2. Triebwerksverkleidung nach Anspruch 1, **dadurch gekennzeichnet, dass** die Schubumkehraktuatoren (31) eine Fachwerkstruktur bilden.

3. Triebwerksverkleidung nach Anspruch 1 oder 2, **dadurch gekennzeichnet, dass** die Schubumkehraktuatoren (31) an ihren Endbereichen jeweils gelenkig gelagert sind.

4. Triebwerksverkleidung nach einem der Ansprüche 1 bis 3, **dadurch gekennzeichnet, dass** die Schubumkehraktuatoren (31) in Form von hydraulischen oder elektrischen Aktuatoren ausgebildet sind.

5. Triebwerksverkleidung nach einem der Ansprüche 1 bis 4, **dadurch gekennzeichnet, dass** die Schubumkehraktuatoren (31) mittels Synchronisierungselementen (32) miteinander gekoppelt sind.

6. Triebwerksverkleidung nach einem der Ansprüche 1 bis 5, **dadurch gekennzeichnet, dass** nur im oberen Bereich der Triebwerksverkleidung zusätzlich sich in Axialrichtung erstreckende Schienen angeordnet sind.

7. Triebwerksverkleidung nach einem der Ansprüche 1 bis 6, **dadurch gekennzeichnet, dass** die Schubumkehraktuatoren (31) um den Umfang der Fluggasturbine verteilt angeordnet sind.

8. Triebwerksverkleidung nach einem der Ansprüche 1 bis 7, **dadurch gekennzeichnet, dass** der hintere Bereich (25) in eine Reiseflugposition, in eine Position für maximalen Schub und in eine Schubumkehrposition bringbar ist.
